# EUROPÄISCHE PATENTANMELDUNG

(11) **EP 0 735 550 A1**
(43) Veröffentlichungstag der Anmeldung: **02.10.1996**
(21) Anmeldenummer: 96102499.9
(22) Anmeldetag: 20.02.1996
(51) Int. Cl.: H01F 5/04

(54) **Spulenkörper**

(30) Priorität: 01.04.1995 DE 19512343
(71) Anmelder: HOHENLOHER SPULENKÖRPERFABRIK GmbH & Co., D-74613 Öhringen (DE)
(72) Erfinder: Lehmann,Eberhard,Dipl.-Ing., D-74629 Pfedelbach-Windischenbach (DE)
(74) Vertreter: Rehmann, Klaus-Thorsten, Dipl.-Ing.

(57) **Zusammenfassung**

Ein Spulenkörper (1) mit in einem unteren Flansch (2) eingespritzten Anschlußstiften (3), die mit Spulenwickeldrähten umwickelbar sind, zeichnet sich dadurch aus, daß die einzuspritzenden Enden (3a) der Anschlußstifte mit einer kreisabschnittförmigen Einprägung (4) versehen sind. Die Einprägung wird über eine hochglanzpolierte kreiszylinderförmige Nadel (10) in das Material eingebracht. Durch die Einprägung mit sehr geringer Rauhtiefe werden die ansonsten mit der Verformung verbundenen Zinnstäube wirksam vermieden, wodurch eine Verschmutzung der Spritzwerkzeuge drastisch reduziert wird. Außerdem werden durch diese Ausbildungsform die notwendigen Ausreißkräfte deutlich erhöht.

## Beschreibung

Die Erfindung betrifft einen Spulenkörper mit in einem unteren Flansch eingespritzten Anschlußstiften, die mit Spulenwickeldrähten umwickelbar sind und ein Verfahren zur Bearbeitung eines in einer vorgegebenen Länge vorliegenden Anschlußstifts.

Es ist bekannt, Kunststoff-Spulenkörper in rationeller Weise dadurch herzustellen, daß die Anschlußstifte in die Spritzform eingeführt und mit dem Material des Spulenkörpers umspritzt werden, so daß sie bereits durch den Spritzvorgang in dem Spulenkörper fest verankert sind. Zur Verbesserung der Verankerung, das heißt, zur Erhöhung der notwendigen Auszugskräfte für die Anschlußstifte aus dem Spulenkörper, weisen diese entweder einen verdickten Kopf auf oder sie werden im Bereich ihres einzuspritzenden Endes mit Einkerbungen oder Rändelungen versehen. Um die Rändelung rationell einbringen zu können, verläuft diese über die gesamte Länge der Anschlußstifte.

Die Anschlußstifte bestehen üblicherweise aus einer verzinnten Kupfer-Zinn-Legierung mit Nickelsperrschicht. Die Auszugsfestigkeit von Anschlußstiften, die mit Einkerbungen oder einer Rändelung versehen sind, ist stark abhängig von der Tiefe der Einkerbung bzw. Rändelung. Diese werden über scharfkantige Werkzeuge in den Rohling eingeschlagen bzw. eingerollt. Bei der daraus resultierenden Verformung springt das Kupfer/Zinn-Material auf und reißt die Zinnschicht mit heraus. Dieser Zinnstaub stellt bei der Herstellung des Spulenkörpers in der Spritzgießmaschine ein ungeheures Problem dar, weil die Spritzwerkzeuge durch die Stäube sehr rasch verschmutzen und laufend gereinigt werden müssen, was zu Stillstandszeiten der Anlage führt.

Die notwendige Auszugskraft für die Anschlußstifte bei einer bekannten Geometrie der Einkerbungen bzw. Rändelungen läßt sich mit Hilfe der Keilformel bezugsweise Scherkraft einfach ermitteln und daraus wird ersichtlich, daß diese bei herkömmlichen Spulenkörpern relativ niedrig sind.

Von dieser Problemstellung ausgehend soll ein gattungsgemäßer Spulenkörper so verbessert werden, daß bei seiner Herstellung die Verschmutzung der Spritzgießmaschine bzw. der Werkzeuge durch Zinnstäube reduziert wird.

Die Problemlösung erfolgt dadurch, daß die einzuspritzenden Enden der Anschlußstifte mit einer im Querschnitt kreisabschnittförmigen Einprägung versehen sind. Die Einprägung wird erfindungsgemäß mit einer hochglanzpolierten kreiszylindrischen Nadel erzeugt, die von oben in den Bereich des Endabschnitts auf den Anschlußstift gepreßt wird, wobei die Preßkraft so gewählt ist, daß die resultierende im Querschnitt kreisabschnittsförmige Einprägung im Anschlußstift die gewünschte Tiefe aufweist.

Dadurch daß die Einprägung entgegen herkömmlichen Verfahren nicht mit einem scharfen, sondern mit einem im Grunde genommen absolut stumpfen Werkzeug eingebracht werden kann, erfolgt eine völlig gleichmäßige Verformung des Materials des Anschlußstiftes mit einer glatten Oberfläche. Ein Herausreißen der Zinnschicht ist dadurch nahezu ausgeschlossen, so daß Zinnstäube, die vom Material der Anschlußstifte herrühren nahezu völlig eliminiert sind. Die Reinigungsintervalle der Spritzgießwerkzeuge können daher wesentlich verlängert werden, was insgesamt die Produktionskosten eines Spulenkörpers reduziert.

Außerdem hat die kreisabschnittförmige Einprägung gegenüber einer Einkerbung den Vorteil, daß die notwendigen Auszugskräfte für einen Anschlußstift deutlich erhöht werden, was sich ebenfalls rechnerisch nachweisen läßt, weil die resultierenden Reibkräfte an der gewölbten Oberfläche höher sind als an einer keilförmigen Oberfläche, die bei Rändelungen oder Einkerbungen entsteht. Ein kleiner Querschnitt ergibt eine geringere Scherkraft, die der Auszugskraft entgegenwirkt.

Vorzugsweise weisen die Anschlußstifte einen viereckigen Querschnitt auf und sind im Bereich der Einprägung verdickt, wodurch eine weitere Erhöhung der notwendigen Auszugkräfte eintritt, weil auch die Verdickung den Halt im Flansch des Spulenkörpers erhöht.

Anhand einer Zeichnung soll ein Ausführungsbeispiel der Erfindung nachfolgend näher erläutert werden. Es zeigt:
- Figur 1 -: eine Seitenansicht eines Spulenkörpers mit darin verankerten Anschlußstiften,
- Figur 2 -: die Seitenansicht eines mit einer erfindungsgemäßen Einprägung versehenen Anschlußstifts, und
- Figur 3 -: die Teilansicht des Anschlußstifts gemäß Sichtpfeil III nach Figur 2.

Der Spulenkörper 1 weist einen unteren Flansch 2 auf, in den die Anschlußstifte 3 eingespritzt sind. Die Anschlußstifte 3 bilden bekanntermaßen die Anschlüsse für den Spulenkörper 1 und können im oberen Bereich, wo die eingespritzten Enden 3a aus dem Flansch 2 herausragen mit hier nicht dargestellten Spulenwickeldrähten umwickelt werden.

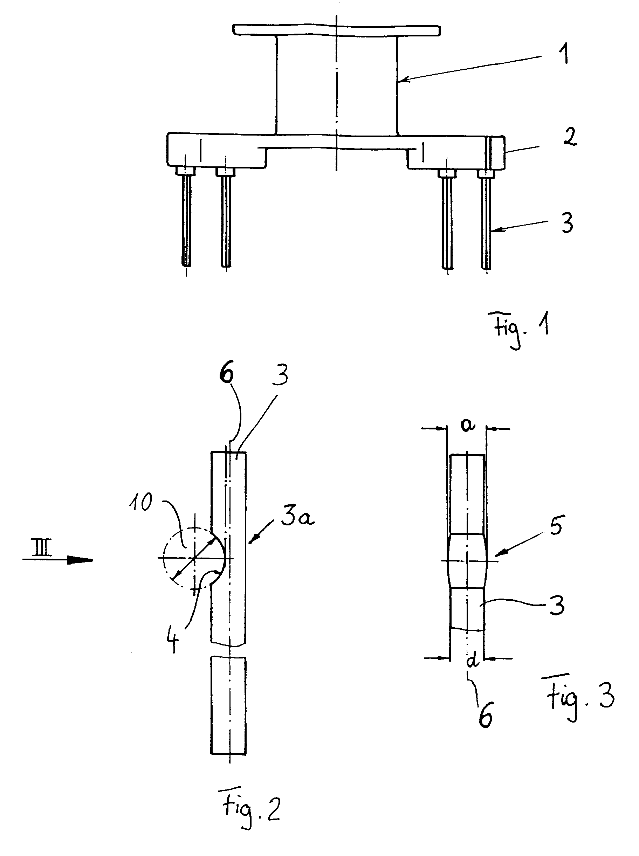

Die Anschlußstifte 3 werden im Bereich ihrer einzuspritzenden Enden 3a mit einer im Querschnitt kreisabschnittförmigen Einprägung 4 versehen, deren Tiefe abhängig ist, von dem Durchmesser der Anschlußstifte 3. Wie Figur 2 entnehmbar ist verläuft die Kreisabschnittform in bezug auf die Längsachse der Anschlußstifte 3. Die Anschlußstifte 3 können einen runden oder vorzugsweise einen viereckigen Querschnitt aufweisen. Wie Figur 2 entnehmbar ist, ragt die Einprägung nicht bis auf die Mittellinie 6 des Anschlußstifts 3, sondern endet kurz davor.

Die Einprägung 4 erfolgt über Aufpressen einer hochglanzpolierten kreiszylinderförmigen Nadel 10, die in Figur 2 mit gestrichelten Linien dargestellt ist. Wie Figur 3 entnehmbar ist, drückt sich beim Einprägen der Einprägung 4 das Material des Anschlußstifts 3 seitlich nach außen und bildet eine Verdickung 5, deren maximale Breite a größer ist als der Durchmesser d des Anschlußstifts 3.

Die Feinheit der erzielbaren Oberflächenrauhheit der Einprägung 4 ist abhängig von der Rauhtiefe der hochglanzpolierten Nadel 10. Da das Prägewerkzeug praktisch völlig stumpf ausgebildet ist, tritt beim Prägen kaum Verschleiß auf, so daß auch die Standzeit des Prägewerkzeugs (Nadel 10) gegenüber herkömmlichen Werkzeugen erhöht ist.

## Patentansprüche

1. Spulenkörper (1) mit in einem unteren Flansch (2) eingespritzten Anschlußstiften (3), die mit Spulenwickeldrähten umwickelbar sind, **dadurch gekennzeichnet, daß** die einzuspritzenden Enden (3a) der Anschlußstifte (3) mit einer im Querschnitt kreisabschnittförmigen Einprägung (4) versehen sind.

2. Spulenkörper nach Anspruch 1, **dadurch gekennzeichnet, daß** die Anschlußstifte (3) einen viereckigen Querschnitt aufweisen.

3. Spulenkörper nach Anspruch 1, **dadurch gekennzeichnet, daß** die Anschlußstifte (3) im Bereich der Einprägung (4) verdickt sind.

4. Anschlußstift (3) für einen Spulenkörper (1), **dadurch gekennzeichnet, daß** dessen einzuspritzenden Enden (3a) mit einer im Querschnitt kreisabschnittförmigen Einprägung (4) versehen sind.

5. Verfahren zur Herstellung eines in einer vorgegebenen Länge vorliegenden Anschlußstiftes (3), nach einem der Ansprüche 1 bis 4, **dadurch gekennzeichnet, daß** eine hochglanzpolierte kreiszylindrische Nadel (10) von oben in den Bereich des Endabschnitts (3a) auf den Anschlußstift (3) gepreßt wird, wobei die Preßkraft so gewählt ist, daß die resultierende im Querschnitt kreisabschnittförmige Einprägung (4) im Anschlußstift (3) die gewünschte Tiefe aufweist.
